# EUROPEAN PATENT SPECIFICATION

(11) **EP 3 657 038 B1**
(45) Date of publication and mention of the grant of the patent: **11.05.2022**
(21) Application number: 18835632.3
(22) Date of filing: 20.07.2018
(51) Int. Cl.: F16D 65/092, B61H 5/00

(54) **FRICTION PAD ASSEMBLY FOR DISK BRAKE**
BREMSBELAGANORDNUNG FÜR EINE SCHEIBENBREMSE
ENSEMBLE PLAQUETTE DE FREIN POUR FREIN À DISQUE

(30) Priority: 21.07.2017 JP 2017141701
(43) Date of publication of application: 27.05.2020
(73) Proprietor: Akebono Brake Industry Co., Ltd., Tokyo 103-8534 (JP)
(72) Inventor: OKADA Yuichi, Tokyo 103-8534 (JP); HARIGAI Yoshikazu, Tokyo 103-8534 (JP); YAMAZAKI Akihiko, Tokyo 103-8534 (JP); SHINDO Takayuki, Tokyo 103-8534 (JP); TERAKADO Takuya, Tokyo 103-8534 (JP)
(74) Representative: Grünecker Patent- und Rechtsanwälte PartG mbB
(86) International application number: PCT/JP2018/027288
(87) International publication number: WO 2019/017475

(56) References cited:
- EP-A2- 0 786 606
- WO-A1-2011/034431
- DE-A1-102008 003 529
- JP-A- 2011 117 612
- JP-B2- 4 980 472
- US-A- 4 207 971

## Description

### Technical Field

The present invention relates to a friction pad assembly for a disc brake.

### Background Art

A disc brake device includes a disc rotor to be fixed to an axle, a friction pad assembly for a disc brake in which a lining member is assembled on a surface of a torque receiving plate, which is disposed so as to face the disc rotor, on a disc rotor side, and a brake caliper that houses an actuator driving the torque receiving plate forward and backward toward the disc rotor and is fixed to a vehicle body frame. Then, the disc brake device generates a braking force by sliding friction when the lining member is pressed against the disc rotor by advancing the torque receiving plate toward the disc rotor side.

In a disc brake device for a railway vehicle, a disc rotor and a friction pad assembly for a disc brake are large in size. Therefore, when the lining member to be pressed against the disc rotor is formed as an integral component, a non-contact area increases due to undulations generated in the disc rotor due to frictional heat or the like. As a result, a stable friction area cannot be maintained, and stable braking characteristics cannot be obtained.

In order to solve such a problem, there has been known a friction pad assembly for a disc brake in which a lining assembly swingably supported by a guide plate and pressed toward a disc rotor includes, on a back plate portion fixed to a back surface of a friction member, a plate fitting portion whose an outer peripheral surface is swingably fitted to a guide hole portion of the guide plate, and a retaining flange portion having an outer diameter larger than that of the guide hole portion, and transmits a braking torque acting when the disc rotor and the friction member come into contact from the plate fitting portion to the guide plate, and between a torque receiving plate fixed to the guide plate and the back plate portion with a gap between the torque receiving plate and the back plate portion, a plurality of link plates are provided across the plurality of lining assemblies to apply a pressing force from the torque receiving plate to the lining assemblies (see Patent Literature 1).

In the friction pad assembly for a disc brake configured as described above, each of the divided lining assemblies comes into contact with a disc rotor surface with following undulations on the disc rotor surface by an individual swinging operation. Therefore, a stable friction area can be maintained, and stable braking characteristics can be maintained.

In addition, a member that receives the braking torque from the lining assemblies and a member that applies the pressing force on the lining assemblies are separately set, and a braking torque to be a large load does not act on contact portions of the torque receiving plate and the link plates that apply the pressing force to the respective lining assemblies. Therefore, each of the contact portions that transmits the pressing force does not need to be in a robust engagement such as a ball joint that receives the braking torque, so that cost reduction and productivity improvement can be realized by reducing machining accuracy. Further relevant prior art us described in JP 2011 117612 A, US 4 207 971 A, EP 0 786 606 A2 and DE 10 2008 003529 A1.

### Citation List

### Patent Literature

Patent Literature 1: Japanese Patent No. 4980472

### Summary of Invention

### Technical Problem

In the friction pad assembly for a disc brake described in Patent Literature 1 or the like, since an internal space in which the plurality of lining assemblies linked by the link plates can swing is formed on a back surface side of the lining assemblies, a housing is formed by the guide plate and the torque receiving plate whose an entire peripheral edge portion is fixed to a peripheral edge portion of the guide plate.

However, in the above-described conventional housing structure, there is a possibility that water enters an inner portion of the housing from a gap between the guide hole portion of the guide plate and the plate fitting portion of the lining assembly, and it is considered that a function of the lining assembly is deteriorated due to occurrence of rust or the like caused by the water, freezing of the water that has entered an inner portion of the housing, or the like.

The present invention has been made in view of the above circumstances, and an object thereof is to provide a friction pad assembly for a disc brake that can prevent water or the like from accumulating inside a housing formed by a guide plate and a torque receiving plate.

### Solution to Problem

In particular, it is provided a friction pad assembly having the features defined in claim 1. Further preferred embodiments are defined in the dependent claims.

According to the friction pad assembly for a disc brake configured as described above, water or the like entering the internal space of the housing formed by the guide plate and the torque receiving plate is discharged from the hole formed in at least one of the guide plate and the torque receiving plate, and is prevented from accumulating inside the housing. Therefore, a function of the lining assembly is not deteriorated due to occurrence of rust or the like caused by water entering an inner portion of the housing, freezing of the water that has entered the inner portion of the housing, or the like.

### Advantageous Effects of Invention

According to the friction pad assembly for a disc brake according to the present invention, the water or the like is prevented from accumulating inside the housing formed by the guide plate and the torque receiving plate.

The present invention is briefly described above. Further, details of the present invention will be clarified by reading a mode (hereinafter, referred to as "embodiment") for carrying out the invention to be described below with reference to the accompanying drawings.

### Brief Description of Drawings

[Fig. 1] Fig. 1(a) is a back perspective view of a friction pad assembly for a disc brake according to a first embodiment of the present invention, and Fig. 1(b) is a front perspective view of the friction pad assembly for a disc brake shown in Fig. 1(a).
[Fig. 2] Fig. 2 is a back view of the friction pad assembly for a disc brake shown in Fig. 1.
[Fig. 3] Fig. 3 is a sectional view taken along a line III-III in Fig. 2.
[Fig. 4] Fig. 4 is a partially cutaway perspective view of the friction pad assembly for a disc brake in Fig. 1.
[Fig. 5] Fig. 5 is an exploded perspective view of a lining assembly and a link plate shown in Fig. 4.
[Fig. 6] Fig. 6 is a perspective view of a torque receiving plate shown in Fig. 1 as viewed from an inner side.
[Fig. 7] Fig. 7 is a plan view of the torque receiving plate shown in Fig. 6 as viewed from an inner side.
[Fig. 8] Fig. 8(a) is an enlarged sectional view showing a hole formed in the torque receiving plate shown in Fig. 7, and Fig. 8(b) is an enlarged sectional view showing a modification of the hole formed in the torque receiving plate.
[Fig. 9] Figs. 9(a) and 9(b) are enlarged sectional views showing modifications of the hole formed in the torque receiving plate shown in Fig. 7.
[Fig. 10] Fig. 10(a) is an exploded perspective view of a main part of a torque receiving plate and a guide plate in a friction pad assembly for a disc brake according to a second embodiment of the present invention, and Fig. 10(b) is an enlarged sectional view showing a hole shown in Fig. 10(a).
[Fig. 11] Fig. 11(a) is a perspective view of a main part of a friction pad assembly for a disc brake according to a third embodiment of the present invention, and Fig. 11(b) is an enlarged sectional view of a main part showing a hole shown in Fig. 11(a).

### Description of Embodiments

Hereinafter, embodiments according to the present invention will be described with reference to the drawings.

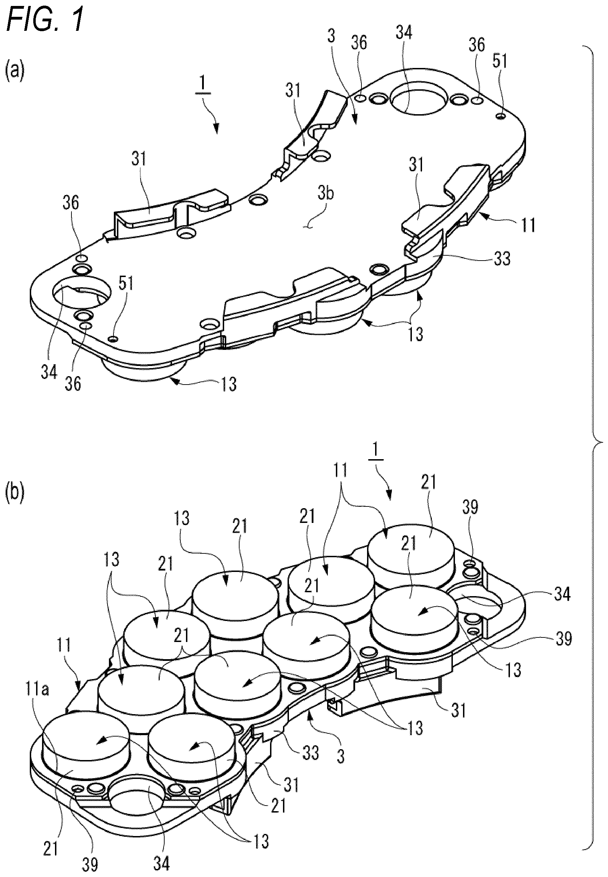

As shown in Figs. 1A to 4, a friction pad assembly 1 for a disc brake according to a first embodiment of the present invention is used in a disc brake device for a railway vehicle, and is disposed so as to face a disc rotor (not shown) on an axle. The friction pad assembly 1 for a disc brake is driven forward and backward toward the disc rotor by an actuator built in a brake caliper fixed to a vehicle body frame.

As shown in Figs. 1A to 4, the friction pad assembly 1 for a disc brake according to the present embodiment includes a torque receiving plate 3 driven forward and backward toward the disc rotor by the actuator built in the brake caliper (not shown), a first link plate 5 and a second link plate 6 that are two types of link plates laid in a manner of a substantially planer shape on an inner surface of the torque receiving plate 3 on a disc rotor side; a guide plate 11 connected and fixed to the torque receiving plate 3 on the disc rotor side of the torque receiving plate 3, and ten lining assemblies 13 swingably fitted to and supported by the guide plate 11, and spring members 24 provided between the first link plate 5 and the second link plate 6 and the torque receiving plate 3.

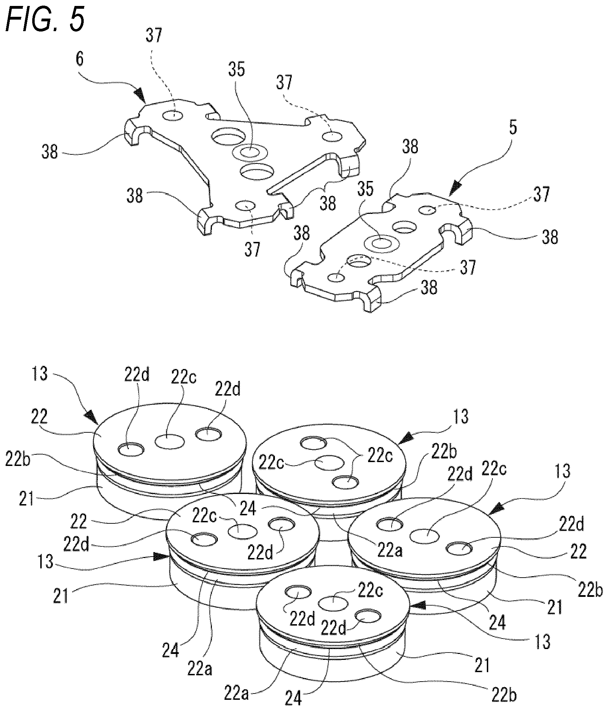

As shown in Fig. 5, each of the lining assemblies 13 includes a friction member 21 formed in a substantially disc shape and a back plate portion 22 fixed to a back surface of the friction member 21.

As shown in Fig. 5, the back plate portion 22 is formed with a plate fitting portion 22a and a retaining flange portion 22b. An outer peripheral surface of the plate fitting portion 22a is swingably fitted into a circular guide hole portion 11a formed to penetrate the guide plate 11. The spring member 24 having an annular shape is fitted to the plate fitting portion 22a. An outer diameter of the spring member 24 is set larger than that of the guide hole portion 11a. The retaining flange portion 22b is formed with an outer diameter larger than that of the guide hole portion 1 1a of the guide plate 11, and prevents the lining assembly 13 from coming off to the disc rotor side.

Incidentally, a configuration of the lining assembly according to the present invention is not limited to a configuration of the lining assembly 13, and various modes can be adopted as long as the lining assembly is swingably supported by the guide plate.

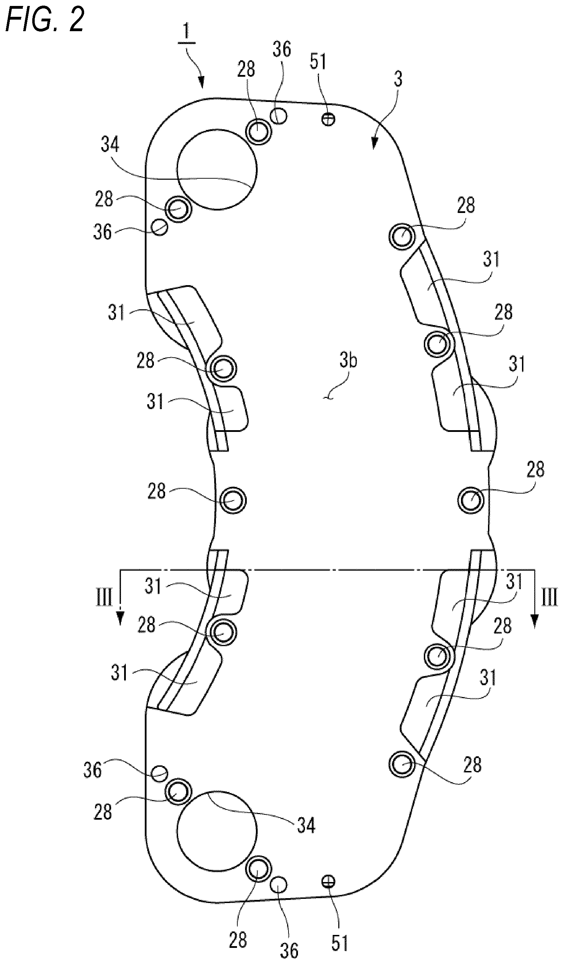

As shown in Fig. 2, flange portions 31 attached to the brake caliper are provided along a peripheral edge portion of an outer surface 3b of the torque receiving plate 3 formed by casting. The flange portions 31 are connected to the actuator built in the brake caliper, so that the friction pad assembly 1 for a disc brake can be driven forward and backward to the disc rotor. Further, the torque receiving plate 3 is formed with fixing holes 34 and positioning holes 36 through which fixing pins and positioning pins respectively penetrate when the torque receiving plate 3 is attached to the brake caliper.

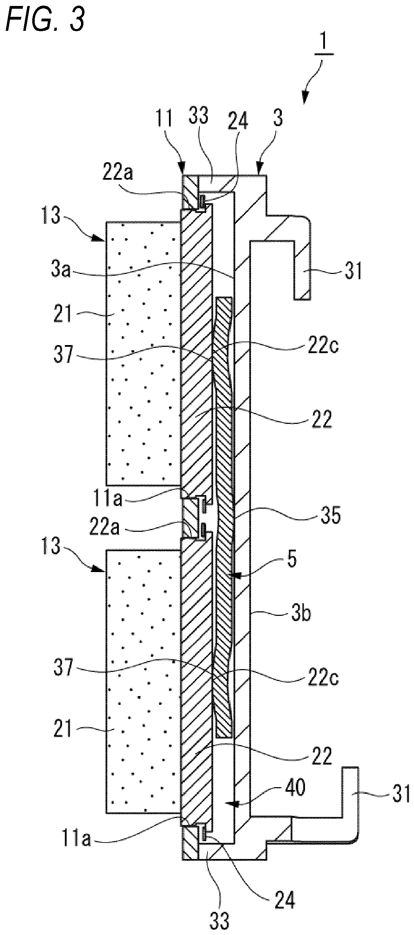

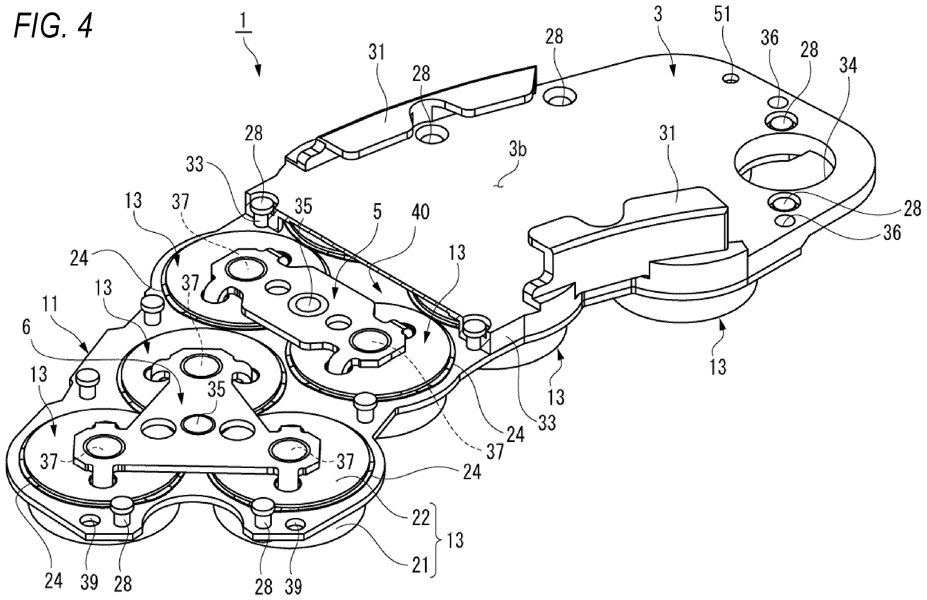

As shown in Figs. 3 and 4, the torque receiving plate 3 is formed with a peripheral wall 33 protruding from an entire peripheral edge portion of a flat plate portion in order to open an internal space 40 between the torque receiving plate 3 and the back plate portion 22 of the lining assembly 13. Further, the torque receiving plate 3 is fixed to a peripheral edge portion of the guide plate 11 by rivets 28, which is a fastening member, while opening the internal space 40 between the torque receiving plate 3 and the back plate portion 22 of the lining assembly 13. That is, the guide plate 11 and the torque receiving plate 3 whose the entire peripheral edge portion (the peripheral wall 33) is fixed to the peripheral edge portion of the guide plate 11 form a housing for forming the internal space 40 in which the lining assembly 13 can swing on a back surface side of the lining assembly 13.

Incidentally, the entire peripheral edge portion of the torque receiving plate may be fixed to the peripheral edge portion of the guide plate 11 via a separate spacer, and the housing that forms the internal space 40 may be formed.

As shown in Fig. 5, the first link plate 5 and the second link plate 6 are disposed across the plurality of lining assemblies 13 to apply a pressing force from the torque receiving plate 3 to the lining assemblies 13. On back surfaces (upper surfaces in Fig. 5) of the first link plate 5 and the second link plate 6, plate abutting curved surface portions 35, which are convex portions protruding substantially at a center of gravity of each of the first link plate 5 and the second link plate 6, are formed toward an inner surface 3a of the torque receiving plate 3, respectively. Each of the plate abutting curved surface portions 35 abuts against the inner surface 3a of the torque receiving plate 3 to allow the first link plate 5 and the second link plate 6 to swing.

Ten guide hole portions 11a are formed at predetermined separation intervals in the guide plate 11 punched from a flat plate material, and the lining assemblies 13 are mounted to the guide hole portions 11a, respectively. In addition, positioning holes 39 corresponding to the positioning holes 36 of the torque receiving plate 3 are formed on an upper end side of the guide plate 11.

Each of the lining assemblies 13 is inserted and mounted to the corresponding guide hole portion 11a from the back surface side of the guide plate 11 such that the spring members 24 fitted to the plate fitting portions 22a are sandwiched between the guide plate 11 and the retaining flange portions 22b, so that a braking torque acting when the disc rotor and the friction members 21 come into contact is transmitted from the plate fitting portions 22a to the guide plate 11.

In the friction pad assembly 1 for a disc brake according to the first embodiment, the plurality of lining assemblies 13 (ten in the present embodiment) are laid and arranged in a planar shape, but variation can be prevented in a contact property of each of the lining assemblies 13 with respect to the disc rotor, since the spring members 24 disposed so as to be sandwiched between the retaining flange portions 22b of the lining assemblies 13 and the guide plate 11 absorb a dimensional tolerance in a thickness direction of the lining assemblies 13.

Therefore, stable braking characteristics can be maintained without being affected by the dimensional tolerance in the thickness direction of the lining assembly 13.

The back plate portion 22 of each of the lining assemblies 13 is formed with a link abutting portion 22c having a concave curved surface shape at a center, and anti-rotation engagement holes 22d at a position away from the center.

Correspondingly, the first link plate 5 and the second link plate 6 are provided with rotation regulating portions 38 loosely fitted in the engagement holes 22d to regulate a rotation behavior of the lining assemblies 13, respectively. The rotation regulating portion 38 is formed by bending a protruding piece extending from end portions of the first link plate 5 and the second link plate 6 to an engagement hole side.

In the first link plate 5 and the second link plate 6, back plate abutting curved surface portions 37 are formed corresponding to the link abutting portions 22c of the back plate portions 22, respectively. The back plate abutting curved surface portion 37 is formed on a convex curved surface against which the link abutting portion 22c abuts in a swingable manner.

In the friction pad assembly 1 for a disc brake according to the first embodiment, the first link plate 5 and the second link plate 6 apply the pressing force from the torque receiving plate 3 to the lining assemblies 13. That is, the pressing force from the torque receiving plate 3 is directly transmitted from the plate abutting curved surface portions 35 to the first link plate 5 and the second link plate 6.

In the friction pad assembly 1 for a disc brake, each of the lining assemblies 13 divided into small parts is swingably supported by the first link plate 5 and the second link plate 6. Accordingly, each of the lining assemblies 13 comes into contact with a disc rotor surface by following undulations on the disc rotor surface by individual swinging. Therefore, in the friction pad assembly 1 for a disc brake, a stable friction area can be maintained and the stable braking characteristics can be maintained.

In the friction pad assembly 1 for a disc brake, the guide plate 11 and the torque receiving plate 3 are fastened by the rivets 28 to form an integral housing structure. An outer diameter of the retaining flange portion 22b formed on the back plate portion 22 of the lining assembly 13 is set to be larger than the guide hole portion 11a of the guide plate 11, so that the lining assembly 13 does not come off from the guide plate 11 due to catch of the retaining flange portion 22b. Therefore, a robust housing structure that does not loosen due to vibration or the like can be obtained, and a highly safe structure in which the lining assembly 13 is prevented from coming off from the guide plate 11 can be obtained with an inexpensive structure.

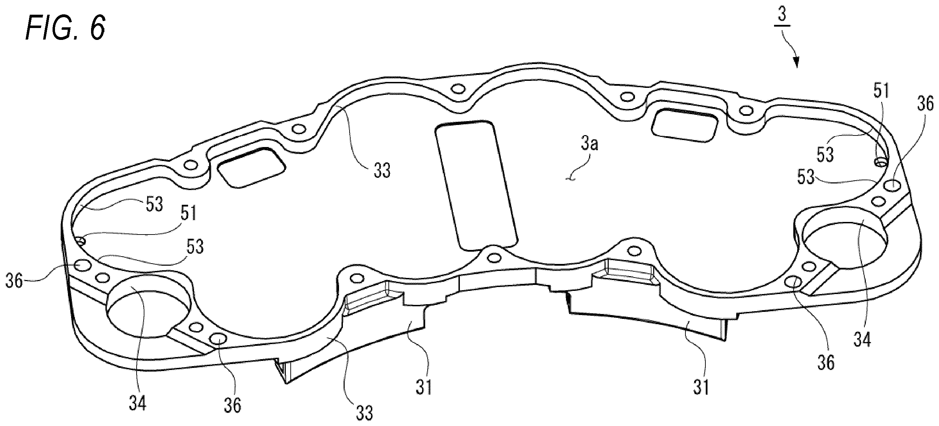

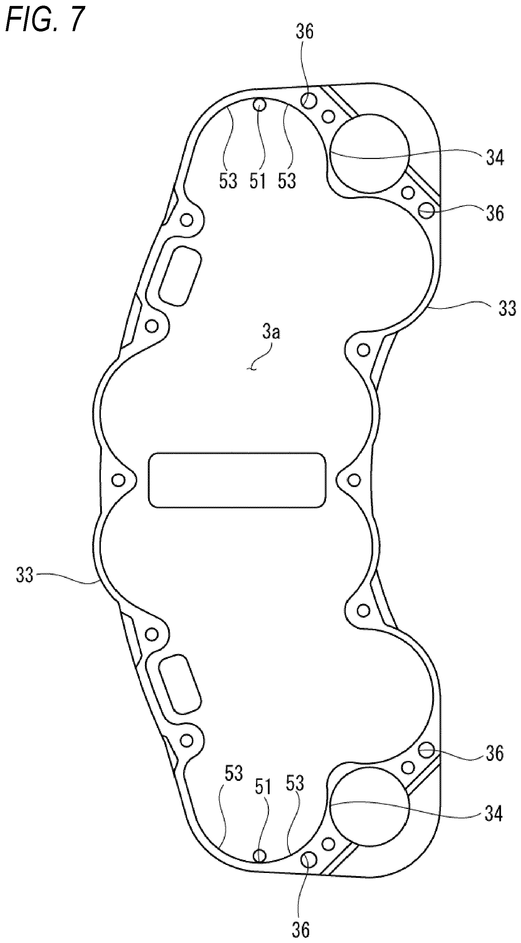

As shown in Figs. 6 and 7, in the torque receiving plate 3 according to the first embodiment is formed with holes 51 that communicates an outer portion of the housing formed by the guide plate 11 and the torque receiving plate 3 and the internal space 40. Each of the holes 51 is formed at a position that is a lower part in a vertical direction (the lower side in Fig. 2) when the friction pad assembly 1 for a disc brake is mounted to a caliper brake mounting portion.

The friction pad assembly 1 for a disc brake according to the first embodiment is formed symmetrically such that the friction pad assembly 1 for a disc brake can be freely vertically attached to the caliper brake mounting portion. Accordingly, the holes 51 are formed at two positions that are upper and lower ends (upper and lower ends in Fig. 7) of the torque receiving plate 3 in the vertical direction. Therefore, regardless of a vertical attaching direction of the friction pad assembly 1 for a disc brake with respect to the caliper brake mounting portion, any one of the holes 51 can be positioned at the lower part of the torque receiving plate 3 in the vertical direction.

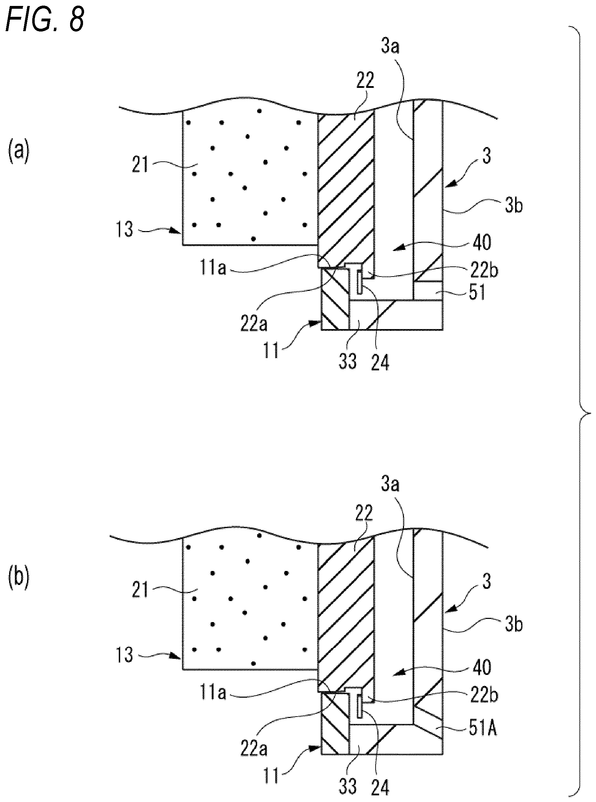

As shown in Fig. 8(a), the holes 51 are cylindrical through holes penetrating in a horizontal direction from the inner surface 3a to the outer surface 3b at the upper and lower ends of the torque receiving plate 3, respectively.

In addition, the torque receiving plate 3 includes a pair of inner wall surfaces 53 inclined toward the respective holes 51 positioned at the lower part in the vertical direction on an inner surface of the peripheral wall 33 in the vicinity of the respective holes 51 (see Fig. 7).

Next, an operation of the friction pad assembly 1 for a disc brake configured as described above will be described.

In the friction pad assembly 1 for a disc brake according to the first embodiment, water may enter the internal space 40 of the housing formed by the guide plate 11 and the torque receiving plate 3 from a gap between the guide hole portion 11a of the guide plate 11 and the plate fitting portion 22a of the lining assembly 13. However, the water or the like entering the internal space 40 of the housing is discharged from the hole 51 formed in the torque receiving plate 3, and is prevented from accumulating inside the housing. Therefore, in the friction pad assembly 1 for a disc brake, an function of the lining assembly 13 is not deteriorated due to occurrence of rust or the like caused by the water entering the inner portion of the housing, freezing of the water that has entered the inner portion of the housing, or the like.

The torque receiving plate 3 according to the first embodiment includes the pair of inner wall surfaces 53 inclined toward the respective holes 51 positioned at the lower part in the vertical direction. Therefore, the water or the like entering the internal space 40 is rapidly discharged from the hole 51 to the outer portion of the housing by going down along the inner wall surface 53, and does not stay below the internal space 40.

Therefore, according to the friction pad assembly 1 for a disc brake according to the first embodiment, the water or the like can be prevented from accumulating inside the housing formed by the guide plate 11 and the torque receiving plate 3.

It is needless to say that a water draining holes formed in the torque receiving plate 3 is not limited to a shape of the hole 51 according to the above-described embodiment, and various shapes may be adopted.

For example, holes 51A shown in Fig. 8(b) are oblique cylindrical through holes penetrating in an oblique upper-lower end direction from the inner surface 3a to the outer surface 3b at the upper and lower ends of the torque receiving plate 3, respectively.

When the friction pad assembly 1 for a disc brake is mounted to the caliper brake mounting portion, an opening end of the hole 51A that opens to the outer surface 3b is positioned below (downward in Fig. 8(b)) an opening end of the hole 51A that opens to the inner surface 3a in the vertical direction. Therefore, the water or the like entering the hole 51A is rapidly discharged to the outer portion of the housing.

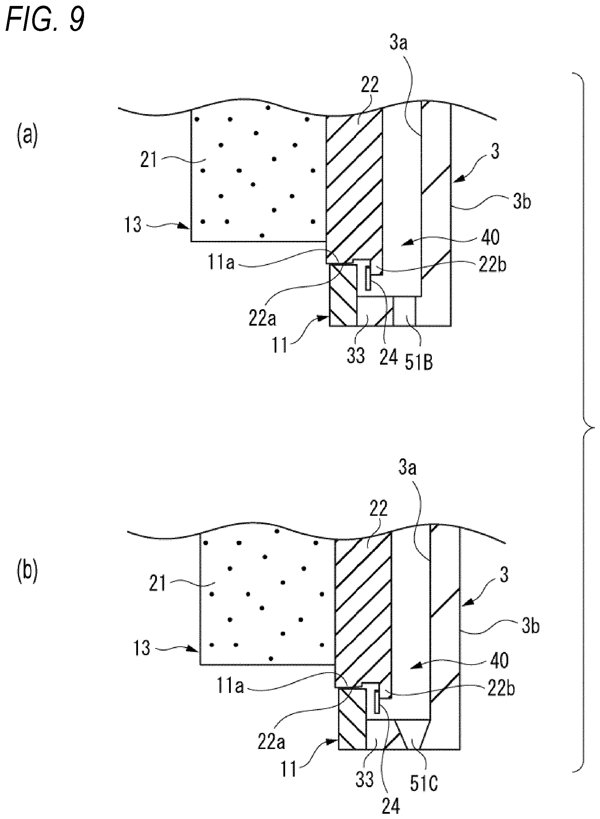

Holes 51B shown in Fig. 9(a) are cylindrical through holes penetrating the peripheral wall 33 at upper and lower ends on the entire peripheral edge portion of the torque receiving plate 3 and penetrating in an upper-lower end direction in the vertical direction.

The hole 51B is opened so as to extend downward in the vertical direction (downward in Fig. 8(b)) when the friction pad assembly 1 for a disc brake is mounted to the caliper brake mounting portion. Therefore, the water or the like entering the hole 51B is rapidly discharged to the outer portion of the housing.

Holes 51C shown in Fig. 9(b) are truncated cone-shaped through holes penetrating the peripheral wall 33 at the upper and lower ends on the entire peripheral edge portion of the torque receiving plate 3 and penetrating in the upper-lower end direction in the vertical direction, and respectively include opening on an inner portion side of the housing larger than an opening on an outer portion side of the housing.

The hole 51C opens widely on the inner portion side of the housing and opens small on the outer portion side of the housing, when the friction pad assembly 1 for a disc brake is mounted to the caliper brake mounting portion. Therefore, the water or the like inside the housing is easily discharged, and the water or the like outside the housing can be made difficult to enter.

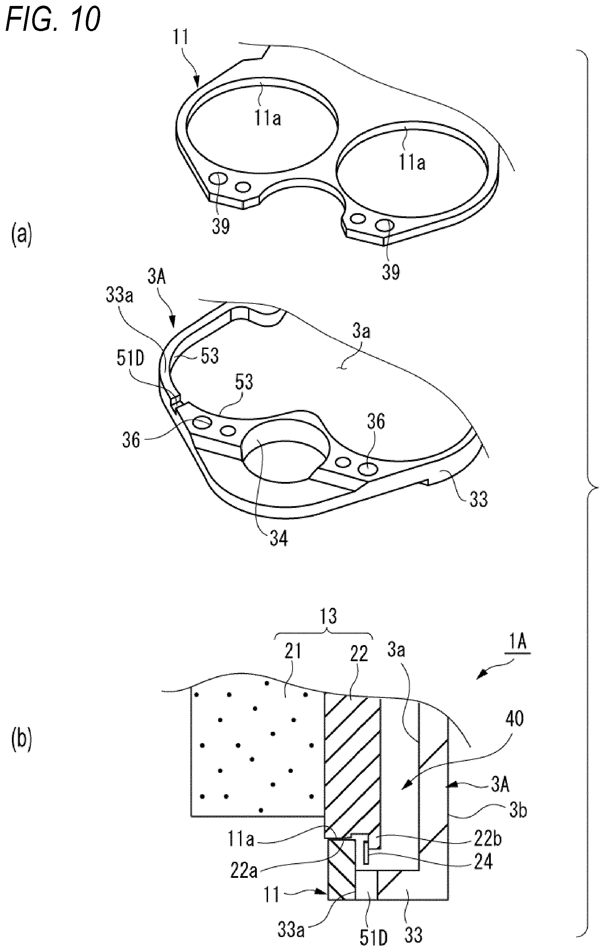

Fig. 10(a) is an exploded perspective view of a main part of a torque receiving plate 3A and the guide plate 11 in a friction pad assembly 1A for a disc brake according to a second embodiment of the present invention, and Fig. 10(b) is an enlarged sectional view showing a hole 51D shown in Fig. 10(a). Incidentally, in the friction pad assembly 1A for a disc brake according to the second embodiment, the same components as those of the friction pad assembly 1 for a disc brake according to the first embodiment are denoted by the same reference numerals, and a repetitive description thereof will be omitted.

As shown in Figs. 10(a) and 10(b), the holes 51D of the friction pad assembly 1A for a disc brake according to the second embodiment are grooves that are formed on a fixing surface 33a of the peripheral wall 33 at the upper and lower ends on the entire peripheral edge portion of the torque receiving plate 3A and extend in the upper-lower end direction in the vertical direction. The hole 51D is configured by a groove having a rectangular cross section that is recessed in the fixing surface 33a of the peripheral wall 33 and the guide plate 11 covering an upper portion of the groove.

According to the friction pad assembly 1A for a disc brake according to the second embodiment, the water or the like can be prevented from accumulating inside the housing formed by the guide plate 11 and the torque receiving plate 3A, similarly to the friction pad assembly 1 for a disc brake according to the first embodiment.

Further, since the hole 51D only needs to form a groove on the fixing surface 33a of the peripheral wall 33 fixed to the peripheral edge portion of the guide plate 11, the hole 51D is easier to manufacture than a case of forming the through hole.

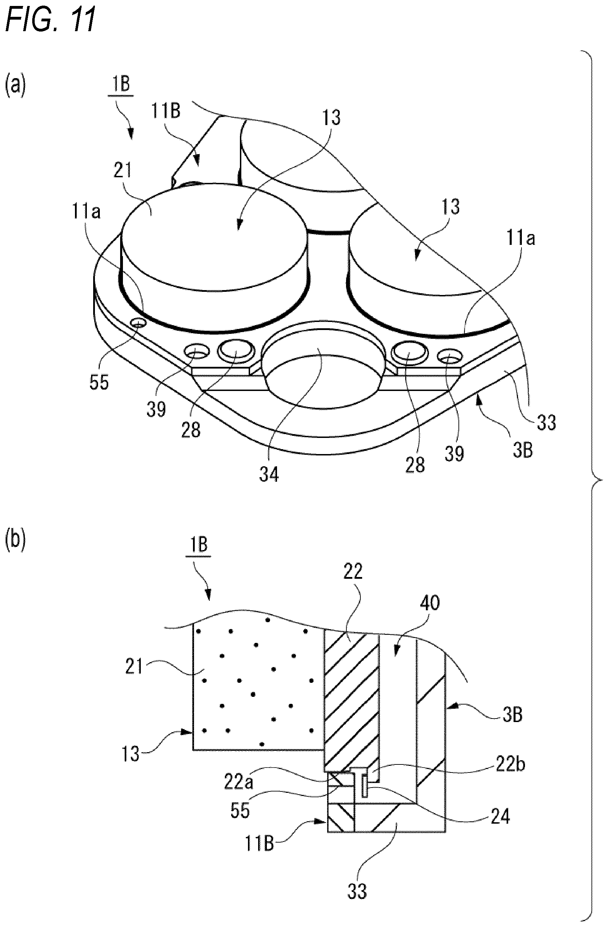

Fig. 11(a) is a perspective view of a main part of a friction pad assembly 1B for a disc brake according to a third embodiment of the present invention, and Fig. 11(b) is an enlarged sectional view showing a hole 55 shown in Fig. 11(a). Incidentally, in the friction pad assembly 1B for a disc brake according to the third embodiment, the same components as those of the friction pad assembly 1 for a disc brake according to the first embodiment are denoted by the same reference numerals, and a repetitive description thereof will be omitted.

As shown in Figs. 11(a) and 11(b), the holes 55 of the friction pad assembly 1B for a disc brake according to the third embodiment are cylindrical through holes formed so as to penetrate in the horizontal direction in order to communicate the outer portion of the housing and the internal space 40 at upper and lower ends of a guide plate 11B.

According to the friction pad assembly 1B for a disc brake according to the third embodiment, the water or the like can be prevented from accumulating inside the housing configured by the guide plate 11B and a torque receiving plate 3B, similarly to the friction pad assembly 1 for a disc brake according to the first embodiment.

Further, since the hole 55 is formed in the guide plate 11B, the hole 55 can be formed at the same time when the guide hole portion 11a of the guide plate 11B is punched, thereby facilitating manufacture.

The present invention is not limited to the embodiments described above, and modifications, improvements, or the like can be made as defined by the scope of the appended claims.

For example, the hole according to the present invention that communicates the outer portion of the housing and the internal space is not limited to a through hole having a circular cross section or a rectangular cross section, and may have various cross sectional shapes such as an elliptical cross section or a polygonal cross section.

The present application is based on a Japanese Patent Application (Japanese Patent Application No. 2017-141701) filed on July 21, 2017.

### Industrial Applicability

According to the friction pad assembly for a disc brake of the present invention, the water or the like can be prevented from accumulating inside the housing formed by the guide plate and the torque receiving plate, and the function of the lining assembly is not deteriorated due to the occurrence of the rust or the like caused by the water, freezing of the water that has entered the inner portion of the housing, or the like.

### Reference Signs List

1 friction pad assembly for a disc brake
3 torque receiving plate
5 first link plate (link plate)
6 second link plate (link plate)
11 guide plate
11a guide hole portion
13 lining assembly
21 friction member
22 back plate portion
22a plate fitting portion
22b retaining flange portion
22c link abutting portion
22d engagement hole
33 peripheral wall (peripheral edge portion)
40 internal space
51 hole

## Claims

1. A friction pad assembly (1) for a disc brake in which at least one lining assembly (13) is swingably supported by a guide plate (11) configured to receive a braking torque, and the lining assembly (13) is pressed against a disc rotor, wherein
the guide plate (11) and a torque receiving plate (3) whose an entire peripheral edge portion is fixed to a peripheral edge portion of the guide plate (11) form a housing for forming an internal space (40) in which the lining assembly (13) can swing, on a back surface side of the lining assembly (13),
at least one of the guide plate (11) and the torque receiving plate (3) is formed with a hole (51) communicating an outer portion of the housing and the internal space (40) at a lower part thereof in a vertical direction when being mounted to a caliper brake mounting portion,
**characterized in that**
the torque receiving plate (3) includes an inner wall surface (53) that is inclined toward the hole (51) positioned at the lower part in the vertical direction.

2. The friction pad assembly (1) for a disc brake according to claim 1, wherein
the lining assembly (13) includes a friction member (21) configured to come into contact with the disc rotor during braking, a back plate portion (22) fixed to a back surface of the friction member (21), and on the back plate portion (22), a plate fitting portion (22a) swingably fitted to a guide hole portion (11a) provided in the guide plate (11), and
the plate fitting portion (22a) is inserted and mounted to the guide hole portion (11a), and a braking torque acting when the disc rotor and the friction member (21) come into contact is transmitted from the plate fitting portions (22a) to the guide plate (11).

3. The friction pad assembly (1) for a disc brake according to claim 2,
wherein
a link plate (5, 6) is provided between the torque receiving plate (3) and the back plate portion (22), the link plate (5, 6) being disposed across a plurality of the lining assemblies (13) to transmit a pressing force between the lining assemblies (13) and the torque receiving plate (3).

4. The friction pad assembly 81) for a disc brake according to any one of claims 1 to 3,
wherein
the hole (51) is formed in the torque receiving plate (3).

5. The friction pad assembly (1) for a disc brake according to claim 4, wherein
the hole (51) is a groove formed on a fixing surface (33a) of the entire peripheral edge portion and extending downward in the vertical direction.

6. The friction pad assembly (1) for a disc brake according to claim 4, wherein
the hole (51) is a through hole penetrating the entire peripheral edge portion and extending downward in the vertical direction.

7. The friction pad assembly (1) for a disc brake according to any one of claims 1 to 3,
wherein
the hole (51) is formed in the guide plate (11).

## Patentansprüche

1. Bremsbelaganordnung (1) für eine Scheibenbremse, bei der mindestens eine Belagbaugruppe (13) schwenkbar von einer Führungsplatte (11) getragen wird, die zur Aufnahme eines Bremsmoments konfiguriert ist, und die Belagbaugruppe (13) gegen einen Scheibenrotor gedrückt wird, wobei
die Führungsplatte (11) und eine drehmomentaufnehmende Platte (3), deren gesamter Umfangsrandabschnitt an einem Umfangsrandabschnitt der Führungsplatte (11) befestigt ist, ein Gehäuse zur Bildung eines Innenraums (40) bilden, in dem die Belagbaugruppe (13) schwingen kann, auf einer Rückflächenseite der Belagbaugruppe (13),
zumindest eine von der Führungsplatte (11) und der Drehmomentaufnahmeplatte (3) mit einem Loch (51) ausgebildet ist, das einen Außenabschnitt des Gehäuses und den Innenraum (40) an einem unteren Teil davon in einer vertikalen Richtung verbindet, wenn es an einem Bremssattel-Montageabschnitt montiert ist,
**dadurch gekennzeichnet, dass**
die drehmomentaufnehmende Platte (3) eine Innenwandfläche (53) aufweist, die zu dem Loch (51) hin geneigt ist, das in dem unteren Teil in der vertikalen Richtung positioniert ist.

2. Bremsbelaganordnung (1) für eine Scheibenbremse nach Anspruch 1, wobei
die Belagbaugruppe (13) ein Reibelement (21), das so konfiguriert ist, dass es während des Bremsens mit dem Scheibenrotor in Kontakt kommt, einen Rückplattenabschnitt (22), der an einer Rückfläche des Reibelements (21) befestigt ist, und auf dem Rückplattenabschnitt (22) einen Plattenbefestigungsabschnitt (22a) umfasst, der schwenkbar in einen in der Führungsplatte (11) vorgesehenen Führungslochabschnitt (11a) eingepasst ist, und
der Plattenbefestigungsabschnitt (22a) in den Führungslochabschnitt (11a) eingesetzt und daran befestigt wird, und ein Bremsmoment, das wirkt, wenn der Scheibenrotor und das Reibelement (21) in Kontakt kommen, von den Plattenbefestigungsabschnitten (22a) auf die Führungsplatte (11) übertragen wird.

3. Bremsbelaganordnung (1) für eine Scheibenbremse nach Anspruch 2, wobei
eine Verbindungsplatte (5, 6) zwischen der drehmomentaufnehmenden Platte (3) und dem Rückplattenabschnitt (22) vorgesehen ist, wobei die Verbindungsplatte (5, 6) über einer Mehrzahl der Belagbaugruppen (13) angeordnet ist, um eine Druckkraft zwischen den Belagbaugruppen (13) und der drehmomentaufnehmenden Platte (3) zu übertragen.

4. Bremsbelaganordnung (1) für eine Scheibenbremse nach einem der Ansprüche 1 bis 3, wobei
das Loch (51) in der drehmomentaufnehmenden Platte (3) ausgebildet ist.

5. Bremsbelaganordnung (1) für eine Scheibenbremse nach Anspruch 4, wobei
das Loch (51) eine Nut ist, die an einer Befestigungsfläche (33a) des gesamten Umfangsrandabschnitts ausgebildet ist und sich in vertikaler Richtung nach unten erstreckt.

6. Bremsbelaganordnung (1) für eine Scheibenbremse nach Anspruch 4, wobei
das Loch (51) ein Durchgangsloch ist, das den gesamten Umfangsrandabschnitt durchdringt und sich in der vertikalen Richtung nach unten erstreckt.

7. Bremsbelaganordnung (1) für eine Scheibenbremse nach einem der Ansprüche 1 bis 3, wobei
das Loch (51) in der Führungsplatte (11) ausgebildet ist.

## Revendications

1. Ensemble de plaquettes de frein (1) pour un frein à disque dans lequel au moins un assemblage de garnitures (13) est soutenu en oscillation par une plaque guide (11) configurée pour recevoir un couple de freinage, et l'assemblage de garnitures (13) est appuyé contre un rotor de disque, dans lequel
la plaque guide (11) et une plaque de réception de couple (3) dont une partie d'arête périphérique entière est fixée à une partie d'arête périphérique de la plaque guide (11) forment un boîtier pour former un espace interne (40) dans lequel l'assemblage de garnitures (13) peut osciller, sur un côté de surface arrière de l'assemblage de garnitures (13),
au moins une de la plaque guide (11) et de la plaque de réception de couple (3) est constituée d'un trou (51) communiquant une partie extérieure du boîtier et l'espace intérieur (40) au niveau d'une partie inférieure de celui-ci dans une direction verticale lorsque montée sur une partie de montage de frein à étrier,
**caractérisé en ce que**
une plaque de réception de couple (3) inclut une surface de paroi intérieure (53) qui est inclinée vers le trou (51) positionné au niveau de la partie inférieure dans la direction verticale.

2. L'ensemble de plaquettes de frein (1) pour un frein à disque selon la revendication 1, dans lequel
l'assemblage de garnitures (13) inclut un élément de friction (21) configuré pour entrer en contact avec le rotor de disque au cours du freinage, une partie de plaque arrière (22) fixée à une surface arrière de l'élément de friction (21), et une partie de plaque arrière (22), une partie de fixation de plaque (22a) fixée en oscillation sur une partie de trou guide (11a) disposée dans la plaque guide (11), et
la partie de fixation de plaque (22a) est insérée et montée sur la partie de trou guide (11a), et un couple de freinage agissant lorsque le rotor de disque et l'élément de friction (21) entrent en contact est transmis des parties de fixation de plaque (22a) à la plaque guide (11).

3. L'ensemble de plaquettes de frein (1) pour un frein à disque selon la revendication 2, dans lequel
une plaque de liaison (5, 6) est disposée entre la plaque de réception de couple (3) et la partie de plaque arrière (22), la plaque de liaison (5, 6) étant disposée sur l'ensemble d'une pluralité d'assemblages de garnitures (13) pour transmettre une force de pression entre les assemblages de garnitures (13) et la plaque de réception de couple (3).

4. L'ensemble de plaquettes de frein (81) pour un frein à disque selon l'une quelconque des revendications 1 à 3, dans lequel
le trou (51) est constitué dans la plaque de réception de couple (3).

5. L'ensemble de plaquettes de frein (1) pour un frein à disque selon la revendication 4, dans lequel
le trou (51) est une rainure constituée sur une surface de fixation (33a) de la partie d'arête périphérique entière et s'étendant vers le bas dans la direction verticale.

6. L'ensemble de plaquettes de frein (1) pour un frein à disque selon la revendication 4, dans lequel
le trou (51) est un trou traversant pénétrant la partie d'arête périphérique entière et s'étendant vers le bas dans la direction verticale.

7. L'ensemble de plaquettes de frein (1) pour un frein à disque selon l'une quelconque des revendications 1 à 3, dans lequel
le trou (51) est constitué dans la plaque guide (11).
